# FASCICULE DE BREVET EUROPEEN

(11) **EP 2 535 252 B1**
(45) Date de publication et mention de la délivrance du brevet: **29.01.2014**
(21) Numéro de dépôt: 12171385.3
(22) Date de dépôt: 08.06.2012
(51) Int. Cl.: B62K 25/28

(54) **Vélo dont le cadre comprend un triangle avant et un triangle arrière suspendu audit triangle avant**
Fahrrad, dessen Rahmen ein vorderes Dreick und ein hinteres Dreieck umfasst, das am vorderen Dreieck aufgehängt ist
Bicycle in which the frame includes a front triangle and a rear triangle suspended from said front triangle

(30) Priorité: 17.06.2011 FR 1155346
(43) Date de publication de la demande: 19.12.2012
(73) Titulaire: Shift-Up Engineering, 14200 Herouville St Clair (FR)
(72) Inventeur: Plantet, Pierre-Geoffroy, 83607 Holzkirchen (DE)
(74) Mandataire: Regimbeau

(56) Documents cités:
- DE-A1-102005 036 610
- DE-U1- 20 014 496
- FR-A1- 2 937 004

## Description

L'invention concerne un vélo dont le cadre comprend un triangle avant relié à une fourche et un triangle arrière suspendu audit triangle avant et relié à une roue arrière.

Sur les vélos tout terrain (VTT), la suspension arrière permet d'augmenter le confort du cycliste et l'adhérence des roues au sol, notamment durant la circulation sur un terrain accidenté.

On connaît des vélos dont la suspension arrière est constituée d'un bras oscillant qui est articulé au niveau de la partie inférieure du tube de selle et qui coopère avec un amortisseur, ledit bras oscillant pivotant autour d'un axe fixe parallèle à l'axe du pignon menant porté par le boîtier de pédalier, ledit boîtier de pédalier étant positionné à l'extrémité inférieure du cadre avant, notamment à l'intersection entre le tube de selle et le tube diagonal dudit cadre avant.

Par ailleurs, l'amortisseur comprend deux extrémités qui sont solidaires respectivement de la suspension arrière et du cadre avant, notamment du tube horizontal reliant le tube de selle au tube de guidage ou d'un tube intermédiaire s'étendant globalement du boîtier de pédalier au tube horizontal, le tube de selle étant en particulier interrompu pour laisser le passage audit amortisseur.

Ce type de suspension arrière ne donne pas entière satisfaction, en ce qu'elle provoque un effet de pompage qui se traduit par un enfoncement cyclique de ladite suspension, notamment sous l'action d'un coup de pédale ou lorsque le cycliste se met debout sur les pédales, et ce même lorsque le sol est parfaitement nivelé, ce qui engendre la dissipation dans l'amortisseur d'une partie du couple moteur fourni par ledit cycliste.

Pour pallier cet inconvénient, on connaît notamment des vélos dont l'amortisseur comprend un levier de blocage manuel, afin de permettre au cycliste de désactiver la suspension arrière. De façon plus avantageuse, on connaît également des vélos dont la suspension arrière présente une cinématique particulière qui utilise la force de pédalage du cycliste pour neutraliser ladite suspension, qui n'est alors active que lorsque ledit cycliste ne pédale pas, ce qui permet en outre d'adapter automatiquement ladite suspension.

En outre, on connaît des vélos dont la suspension arrière est constituée d'un bras oscillant qui est articulé au tube de selle et/ou au tube oblique du cadre avant au moyen de deux biellettes, ledit bras ou au moins l'une desdites biellettes coopérant avec l'amortisseur. En fonctionnement, le bras oscillant pivote autour d'un point virtuel mobile appelé centre instantané de rotation (CIR), ledit point correspondant à l'intersection des droites passant par les axes respectifs des biellettes ou à un point situé entre lesdits axes lorsque lesdites biellettes sont parallèles entre elles.

Cependant, ces suspensions ne permettent pas de pallier de façon satisfaisante l'effet de pompage. De plus, la position et l'orientation des biellettes nécessitent une adaptation de la géométrie du cadre avant qui peut notamment affecter la position de conduite, la rigidité dudit cadre et/ou la maniabilité.

On connaît du document FR-2 937 004 un vélo comprenant un cadre avant et une suspension arrière articulée audit cadre avant au moyen de deux biellettes, ainsi qu'un boîtier de pédalier qui est désolidarisé du cadre avant en étant relié audit cadre par une biellette. Cet agencement est toutefois compliqué et nécessite beaucoup de pièces et d'axes de rotation pour fournir une suspension arrière efficace.

L'invention vise à perfectionner l'art antérieur en proposant notamment un vélo qui comprend une suspension arrière permettant d'éliminer de façon satisfaisante l'effet de pompage tout en étant simple à réaliser.

A cet effet, l'invention propose un vélo dont le cadre comprend un triangle avant relié à une fourche, un amortisseur et un triangle arrière suspendu audit triangle avant et relié à une roue arrière, ledit triangle arrière comprenant au moins un hauban supérieur articulé suivant un axe C à une biellette supérieure qui est articulée au triangle avant suivant un axe D, ledit triangle arrière comprenant en outre au moins un hauban inférieur articulé suivant un axe B à une biellette inférieure qui est articulée au triangle avant suivant un axe A, ledit vélo comprenant en outre un boîtier de pédalier associé à une troisième biellette qui est articulée au triangle avant suivant l'axe A, les axes d'articulation B, C et D étant sensiblement situés dans le même plan lorsque le vélo est en position d'équilibre statique dit SAG, le déplacement du triangle arrière par rapport au triangle avant lors de l'amortissement induisant un désalignement des biellettes supérieure et inférieure, l'axe A étant positionné de sorte qu'un effort du cycliste sur le boîtier de pédalier induise un couple qui tend à faire pivoter lesdites biellettes dans le sens de réalignement desdites biellettes.

D'autres particularités et avantages de l'invention apparaîtront dans la description qui suit, faite en référence aux figures annexées, dans lesquelles :
- les figures 1a, 1b représentent de façon schématique un vélo selon un mode de réalisation de l'invention, respectivement en position d'équilibre statique (figure 1a) et en position d'enfoncement du triangle arrière (figure 1 b) ;
- les figures 2a, 2b sont des figures analogues aux figures 1a, 1b selon un deuxième mode de réalisation de l'invention ;
- la figure 3 représente de façon schématique un vélo selon un troisième mode de réalisation de l'invention, ledit vélo étant en position d'équilibre statique ;
- la figure 4 représente de façon schématique un vélo selon un quatrième mode de réalisation de l'invention, ledit vélo étant en position d'équilibre statique ;
- la figure 5 représente de façon schématique un vélo selon un cinquième mode de réalisation de l'invention, le boitier de pédalier n'étant pas représenté ;
- la figure 6 représente de façon schématique un vélo selon un sixième mode de réalisation de l'invention, ledit vélo étant en position d'équilibre statique ;
- la figure 7 représente de façon schématique un vélo selon un septième mode de réalisation de l'invention, le boitier de pédalier n'étant pas représenté ;
- la figure 8 représente de façon schématique un vélo selon un huitième mode de réalisation de l'invention, le boitier de pédalier n'étant pas représenté ;
- la figure 9 représente de façon schématique un vélo selon un neuvième mode de réalisation de l'invention, le boitier de pédalier n'étant pas représenté.

En relation avec ces figures, on décrit ci-dessous un vélo dont le cadre comprend un triangle avant 1 relié à une fourche 2, un amortisseur 12 et un triangle arrière 3 suspendu audit triangle avant et relié à une roue arrière 4.

Le triangle avant 1 comprend notamment un tube de selle 5, un tube de fourche 6, un tube diagonal 7 qui est assemblé par soudage aux extrémités inférieures respectives du tube de selle 5 et du tube de fourche 6, ainsi qu'un tube supérieur 8 sensiblement horizontal qui est assemblé par soudage aux extrémités supérieures respectives desdits tubes de selle et de fourche.

La fourche 2, par exemple de type télescopique, est assemblée au tube de fourche 6 et porte à son extrémité inférieure l'axe du moyeu d'une roue avant 9. En outre, l'extrémité supérieure du tube de fourche 6 est agencée pour le montage d'un guidon et l'extrémité supérieure du tube de selle 5 est agencée pour le montage d'une selle (non représentés).

Par ailleurs, le triangle arrière 3 comprend au moins un hauban supérieur 10 articulé suivant un axe C à une biellette supérieure 11 qui est articulée au triangle avant 1 suivant un axe D. En outre, le triangle arrière 3 comprend au moins un hauban inférieur 13 articulé suivant un axe B à une biellette inférieure 14 qui est articulée au triangle avant 1 suivant un axe A.

Sur les figures, le triangle arrière 3 comprend en outre un tube 19 sensiblement vertical dont les extrémités sont assemblées par soudure respectivement au hauban supérieur 10 et au hauban inférieur 13.

Le vélo comprend également un boîtier de pédalier P associé à une troisième biellette 15 qui est articulée au triangle avant 1 suivant l'axe A. En particulier, la biellette 15 reliant le boîtier de pédalier P au triangle avant s'étend sensiblement verticalement en position d'équilibre statique. On entend par position d'équilibre statique l'enfoncement initial, dit SAG, du triangle arrière 3 en charge, c'est-à-dire lorsqu'un cycliste de poids moyen prend position sur le vélo sans prendre appui sur le sol et sans bouger.

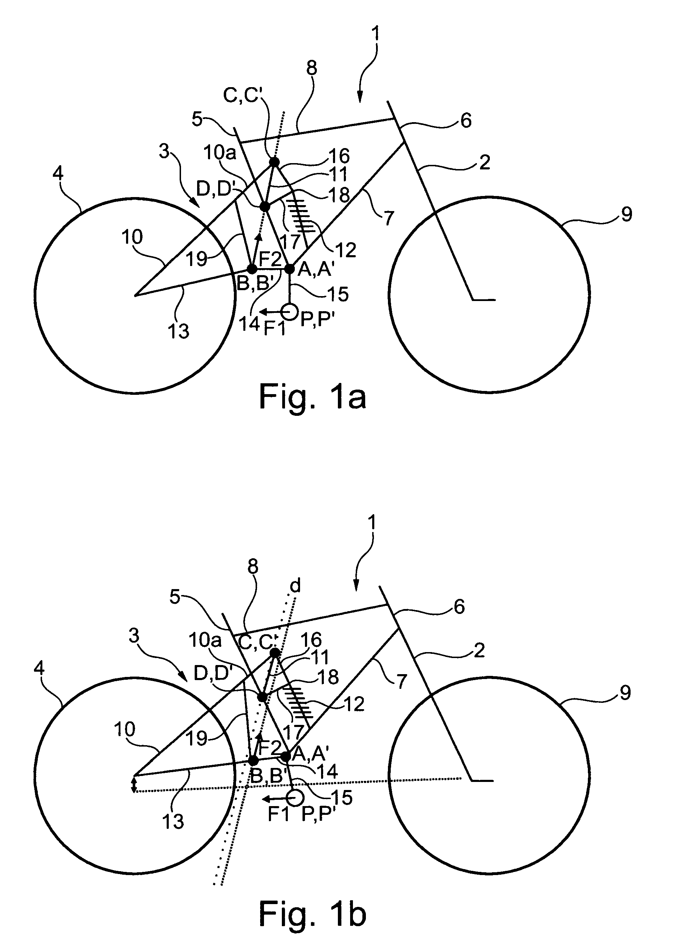

En relation avec les figures 1a, 2a, 3 et 4, lorsque le vélo est en position d'équilibre statique, les axes d'articulation B, C et D sont sensiblement situés dans le même plan. Ainsi, lorsque le cycliste pédale, il génère une force horizontale F1 vers l'arrière qui s'applique sur le boîtier de pédalier P. Cette force F1 se répercute en une force F2 par l'intermédiaire de la biellette 15, la force F2 s'appliquant notamment au niveau des axes d'articulation B et C. Etant donné que les axes B, C et D sont dans le même plan, la force F2 n'entraîne pas l'enfoncement du triangle arrière 3, ce qui évite l'apparition d'un effet de pompage.

De façon avantageuse, pour assurer la stabilité du vélo lors du pédalage, le point A' d'intersection entre l'axe d'articulation A et le plan du vélo doit être positionné par rapport au point P' d'intersection entre l'axe de rotation du boîtier de pédalier P et le plan du vélo, de sorte à satisfaire la relation mathématique (A'P'ΔF1)*(A'B'ΔD'C')>0, dans laquelle A'P' est le vecteur reliant le point A' au point P', les points B', C' et D' sont respectivement les points d'intersection entre les axes d'articulation B, C et D et le plan du vélo, A'B' et D'C' sont les vecteurs reliant respectivement les points A', B' et les points D', C', Δ correspond au produit vectoriel et * correspond au produit scalaire.

En outre, si l'on définit un repère dont l'origine est le point P' dans la position d'équilibre statique du boîtier P, ledit repère comprenant un axe X dirigé vers l'avant du vélo, un axe Y dirigé vers la gauche dudit vélo et un axe Z dirigé vers le haut, la relation mathématique énoncée précédemment s'écrit Z_{A'}*[(Z_{B'}-Z_{A'})*(X_{C'}-X_{D'})-X_{B'}*(Z_{C'}-Z_{D'})] dans ledit repère, (X_{A'}, Y_{A'}, Z_{A'}), (X_{B'}, Y_{B'}, Z_{B'}), (X_{C'}, Y_{C'}, Z_{C'}), (X_{D'}, Y_{D'}, Z_{D'}) étant les coordonnées respectives des points A', B', C', D' dans ledit repère.

En relation avec les figures 1 b et 2b, lors de l'amortissement d'un choc, notamment lorsque la roue arrière 4 rencontre un obstacle, le triangle arrière 3 se déplace par rapport au triangle avant 1, ce qui induit un désalignement des biellettes supérieure 11 et inférieure 14, ledit désalignement entraînant notamment un décalage d dans le plan du vélo entre l'axe d'articulation B et la biellette supérieure 11. En outre, le déplacement du triangle arrière 3 fait avancer le boîtier de pédalier P vers l'avant.

L'axe d'articulation A est positionné de sorte qu'un effort du cycliste sur le boîtier de pédalier P induise un couple qui tend à faire pivoter les biellettes supérieure 11 et inférieure 14 dans le sens de réalignement desdites biellettes. Plus précisément, c'est la force F2 induite par la force horizontale F1 vers l'arrière qui génère un tel couple sur le triangle arrière 3 pour faire pivoter les biellettes 11, 14, ledit couple tendant à ramener le boîtier de pédalier P vers l'arrière.

Ainsi, le pédalage du cycliste ne crée pas d'effet de pompage, mais permet de contraindre le triangle arrière 3 à rester en position d'équilibre statique par rapport au triangle avant 1. Par ailleurs, lorsque le cycliste ne pédale pas, le triangle arrière 3 se déplace normalement par rapport au triangle avant 1, notamment en réponse aux chocs induits par la rencontre de la roue arrière 4 avec un obstacle.

Les figures 1 représentent un vélo selon un premier mode de réalisation, dans lequel la biellette supérieure 11 est articulée au tube de selle 5 suivant l'axe D.

En outre, le hauban supérieur 10 comprend une extension avant 10a au bout de laquelle la biellette supérieure 11 est articulée suivant l'axe C.

De plus, la biellette supérieure 11 forme un triangle avec deux segments 16, 17 de tubes qui sont associés à ladite biellette supérieure respectivement au niveau des axes C et D et qui sont reliés en un sommet 18, ledit sommet étant articulé à une extrémité de l'amortisseur 12, l'autre extrémité dudit amortisseur étant solidaire du tube diagonal 7 du triangle avant 1.

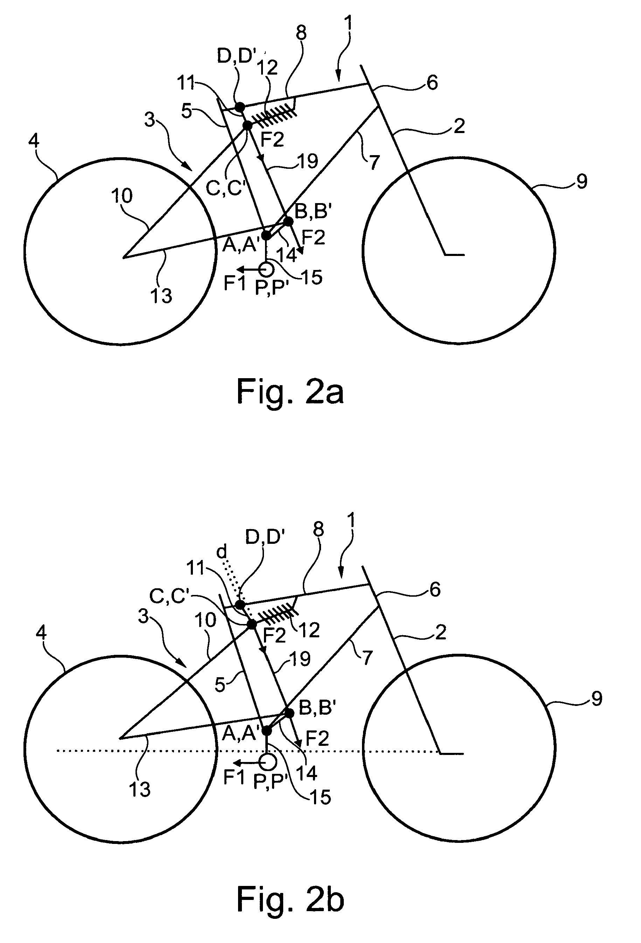

Les figures 2 représentent un vélo selon un deuxième mode de réalisation, dans lequel la biellette supérieure 11 est articulée au tube supérieur 8 suivant l'axe D.

En outre, la biellette supérieure 11 est articulée à une extrémité de l'amortisseur 12 suivant l'axe C, l'autre extrémité dudit amortisseur étant solidaire du tube supérieur 8.

De plus, le hauban inférieur 13 est agencé de sorte que l'axe d'articulation B soit localisé en avant de l'axe d'articulation A.

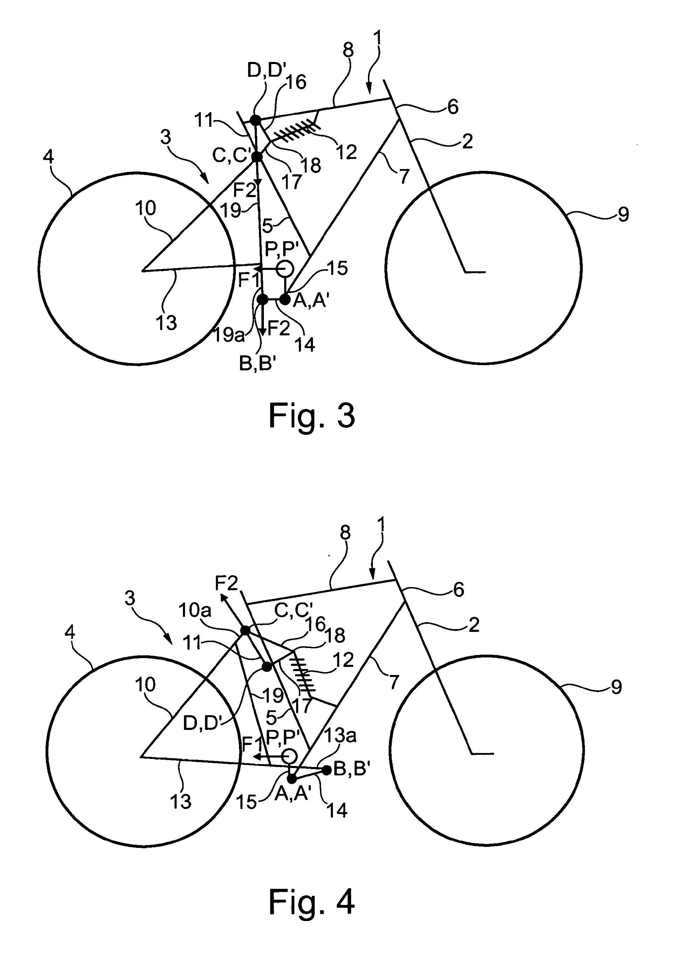

Dans le mode de réalisation de la figure 3, la biellette supérieure 11 est articulée au tube supérieur 8 suivant l'axe D.

En outre, la biellette supérieure 11 forme un triangle avec deux segments 16, 17 de tubes qui sont articulés à ladite biellette supérieure respectivement suivant les axes C et D, lesdits segments étant reliés en un sommet 18 qui est articulé à une extrémité de l'amortisseur 12, l'autre extrémité dudit amortisseur étant solidaire du tube supérieur 8.

De plus, le tube 19 du triangle arrière 3 comprend une extension verticale inférieure 19a au bout de laquelle la biellette inférieure 14 est articulée suivant l'axe C et le boîtier de pédalier P est localisé au dessus de l'axe d'articulation A. La figure 4 représente un vélo selon un autre mode de réalisation, dans lequel la biellette supérieure 11 est articulée au tube de selle 5 suivant l'axe D.

En outre, le hauban supérieur 10 comprend une extension avant 10a au bout de laquelle la biellette supérieure 11 est articulée suivant l'axe C.

Par ailleurs, la biellette supérieure 11 forme un triangle avec deux segments de tubes 16, 17 qui sont articulés à ladite biellette supérieure respectivement suivant les axes C et D, lesdits segments étant reliés en un sommet 18 qui est articulé à une extrémité de l'amortisseur 12, l'autre extrémité dudit amortisseur étant solidaire du tube diagonal 7.

De plus, le hauban inférieur 13 comprend une extension avant 13a au bout de laquelle la biellette inférieure 14 est articulée suivant l'axe B, ladite extension étant agencée de sorte que l'axe d'articulation B soit localisé en avant de l'axe d'articulation A, et le boîtier de pédalier P est localisé au dessus de l'axe d'articulation A.

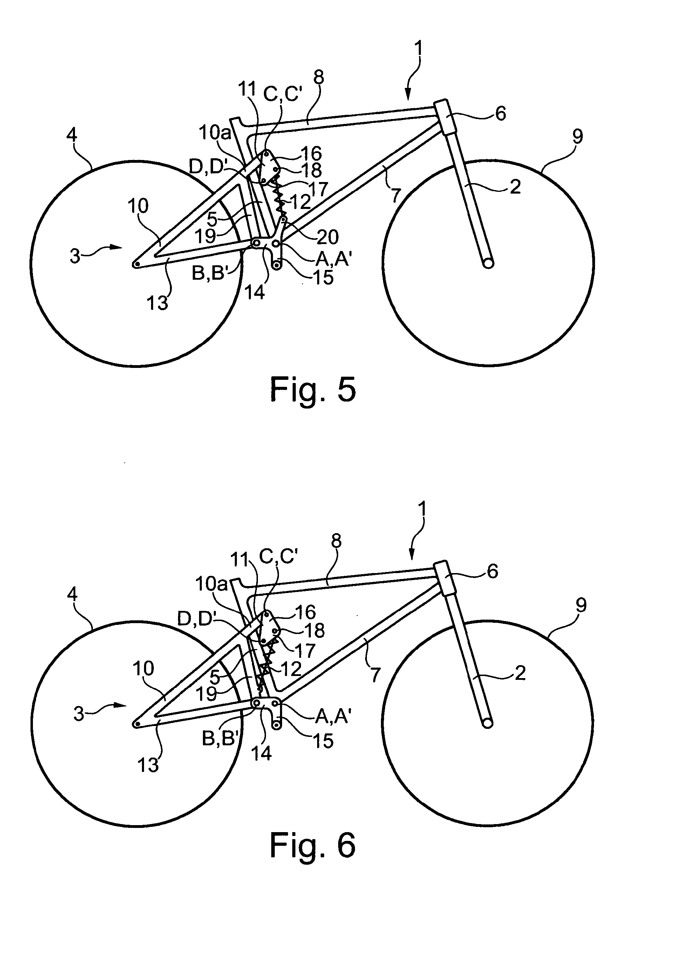

La figure 5 représente un vélo selon un cinquième mode de réalisation, dans lequel la biellette supérieure 11 est articulée au tube de selle 5 suivant l'axe D. En outre, le hauban supérieur 10 comprend une extension avant 10a au bout de laquelle la biellette supérieure 11 est articulée suivant l'axe C.

De plus, la biellette supérieure 11 forme un triangle avec deux segments 16, 17 de tubes qui sont associés à ladite biellette supérieure respectivement au niveau des axes C et D et qui sont reliés en un sommet 18, ledit sommet étant articulé à une extrémité de l'amortisseur 12, l'autre extrémité dudit amortisseur d'une quatrième biellette 20 articulée au triangle avant 1 suivant l'axe A.

Dans le mode de réalisation de la figure 6, l'autre extrémité de l'amortisseur 12 est solidaire du tube 19 sensiblement vertical du tube arrière 3.

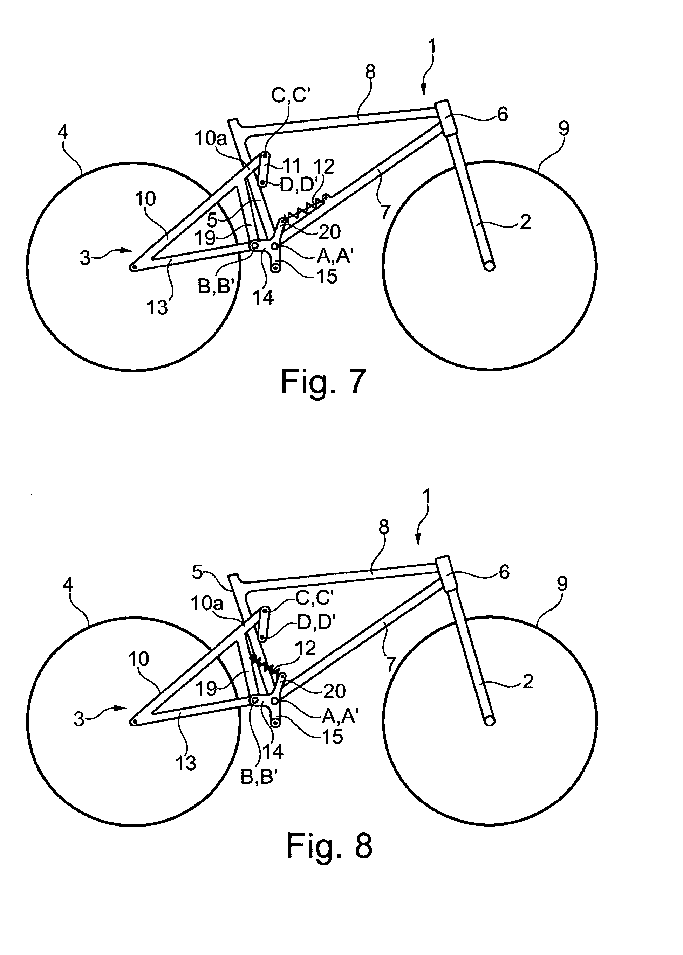

La figure 7 représente un vélo selon un septième mode de réalisation, dans lequel la biellette 11 est articulée au tube de selle 5 suivant l'axe D. En outre, le hauban supérieur 10 comprend une extension avant 10a au bout de laquelle la biellette supérieure 11 est articulée suivant l'axe C.

De plus, une première extrémité de l'amortisseur 12 est solidaire d'une quatrième biellette 20 articulée au triangle avant suivant l'axe A, l'autre extrémité dudit amortisseur étant solidaire du tube diagonal 7 du triangle avant 1.

Dans le mode de réalisation de la figure 8, l'autre extrémité de l'amortisseur 12 est solidaire du tube 19 sensiblement vertical du triangle arrière 3.

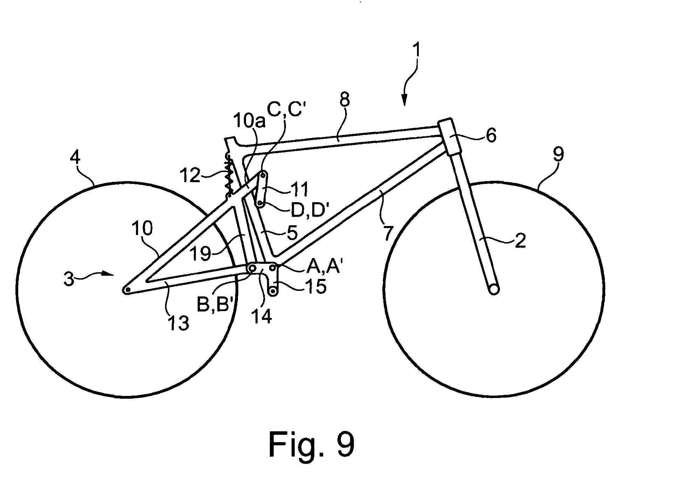

La figure 9 représente un vélo selon un neuvième mode de réalisation, dans lequel la biellette 11 est articulée au tube de selle 5 du triangle avant suivant l'axe D. En outre, le hauban supérieur 10 comprend une extension avant 10a au bout de laquelle la biellette supérieure 11 est articulée suivant l'axe C.

Par ailleurs, une extrémité de l'amortisseur 12 est solidaire du tube de selle 5 du triangle avant 1, l'autre extrémité dudit amortisseur étant solidaire du hauban supérieur 10 du triangle arrière 3.

## Revendications

1. Vélo dont le cadre comprend un triangle avant (1) relié à une fourche (2), un amortisseur (12) et un triangle arrière (3) suspendu audit triangle avant et relié à une roue arrière (4), ledit triangle arrière comprenant au moins un hauban supérieur (10) articulé suivant un axe C à une biellette supérieure (11) qui est articulée au triangle avant (1) suivant un axe D, ledit triangle arrière comprenant en outre au moins un hauban inférieur (13) articulé suivant un axe B à une biellette inférieure (14) qui est articulée au triangle avant (1) suivant un axe A, ledit vélo comprenant en outre un boîtier de pédalier (P), ledit vélo étant **caractérisé en ce que** ledit boîtier de pédalier (P) est associé à une troisième biellette (15) qui est articulée au triangle avant (1) suivant l'axe A et **en ce que** les axes d'articulation B, C et D sont sensiblement situés dans le même plan lorsque le vélo est en position d'équilibre statique dit SAG, le déplacement du triangle arrière (3) par rapport au triangle avant (1) lors de l'amortissement induisant un désalignement des biellettes supérieure (11) et inférieure (14), l'axe A étant positionné de sorte qu'un effort du cycliste sur le boîtier de pédalier (P) induise un couple qui tend à faire pivoter lesdites biellettes dans le sens de réalignement desdites biellettes.

2. Vélo selon la revendication 1, **caractérisé en ce que** la biellette (15) reliant le boîtier de pédalier (P) au triangle avant (1) s'étend sensiblement verticalement en position d'équilibre statique.

3. Vélo selon la revendication 1 ou 2, **caractérisé en ce que** le triangle avant (1) comprend un tube de selle (5) auquel la biellette supérieure (11) est articulée suivant l'axe D.

4. Vélo selon la revendication 1 ou 2, **caractérisé en ce que** le triangle avant (1) comprend un tube supérieur (8) auquel la biellette supérieure (11) est articulée suivant l'axe D.

5. Vélo selon la revendication 4, **caractérisé en ce que** la biellette supérieure (11) est articulée à une extrémité de l'amortisseur (12) suivant l'axe C, l'autre extrémité dudit amortisseur étant solidaire du tube supérieur (8) du triangle avant (1).

6. Vélo selon l'une quelconque des revendications 1 à 4, **caractérisé en ce que** la biellette supérieure (11) forme un triangle avec deux segments de tubes (16, 17) qui sont associés à ladite biellette supérieure respectivement au niveau des axes C et D, lesdits segments étant reliés en un sommet (18) qui est articulé à une extrémité de l'amortisseur (12).

7. Vélo selon la revendication 6, **caractérisé en ce que** l'autre extrémité de l'amortisseur (12) est solidaire du triangle avant (1).

8. Vélo selon la revendication 6, **caractérisé en ce que** l'autre extrémité de l'amortisseur (12) est solidaire d'une quatrième biellette (20) qui est articulée au triangle avant (1) suivant l'axe (A).

9. Vélo selon la revendication 6, **caractérisé en ce que** l'autre extrémité de l'amortisseur (12) est solidaire du triangle arrière (3).

10. Vélo selon la revendication 3, **caractérisé en ce qu'**une extrémité de l'amortisseur (12) est solidaire d'une quatrième biellette (20) articulée au triangle avant (1) suivant l'axe (A).

11. Vélo selon la revendication 10, **caractérisé en ce que** l'autre extrémité de l'amortisseur (12) est solidaire du triangle avant (1).

12. Vélo selon la revendication 10, **caractérisé en ce que** l'autre extrémité de l'amortisseur (12) est solidaire du triangle arrière (3).

13. Vélo selon la revendication 3, **caractérisé en ce qu'**une extrémité de l'amortisseur (12) est solidaire du triangle avant (1), l'autre extrémité dudit amortisseur étant solidaire du triangle arrière (3).

14. Vélo selon l'une quelconque des revendications 1 à 13, **caractérisé en ce que** le hauban inférieur (13) du triangle arrière (3) comprend une extension avant (13a) au bout de laquelle la biellette inférieure (14) est articulée suivant l'axe B.

15. Vélo selon l'une quelconque des revendications 1 à 13, **caractérisé en ce que** le triangle arrière (3) comprend une extension verticale inférieure (19a) au bout de laquelle la biellette inférieure (14) est articulée suivant l'axe B.

16. Vélo selon l'une quelconque des revendications 1 à 15, **caractérisé en ce que** le hauban supérieur (10) du triangle arrière (3) comprend une extension avant (10a) au bout de laquelle la biellette supérieure (11) est articulée suivant l'axe C.

## Patentansprüche

1. Fahrrad, dessen Rahmen Folgendes umfasst: ein vorderes Gestänge (1), das mit einer Gabel (2) verbunden ist, einen Stoßdämpfer (12) und ein hinteres Gestänge (3), das an dem vorderen Gestänge aufgehängt ist und mit einem Hinterrad (4) verbunden ist, wobei das hintere Gestänge mindestens eine obere Verankerung (10) umfasst, die entlang einer Achse C an einem oberen Schwingarm (11) angelenkt ist, der an dem vorderen Gestänge (1) entlang einer Achse D angelenkt ist, wobei das hintere Gestänge ferner mindestens eine untere Verankerung (13) umfasst, die entlang einer Achse B an einem unteren Schwingarm (14) angelenkt ist, der an dem vorderen Gestänge (1) entlang einer Achse A angelenkt ist, wobei das Fahrrad ferner ein Tretlagergehäuse (P) umfasst, wobei das Fahrrad **dadurch gekennzeichnet ist, dass** das Tretlagergehäuse (P) einem dritten Schwingarm (15) zugeordnet ist, der an dem vorderen Gestänge (1) entlang der Achse A angelenkt ist, und dadurch, dass die Gelenkachsen B, C und D im Wesentlichen in der gleichen Ebene liegen, wenn das Fahrrad in der statischen Massenausgleichsposition, der so genannten SAG-Position, ist, wobei die Bewegung des hinteren Gestänges (3) relativ zu dem vorderen Gestänge (1) bei der Dämpfung einen Versatz des oberen (11) und unteren (14) Schwingarms bewirkt, wobei die Achse A derart positioniert ist, dass eine Kraft des Fahrradfahrers auf das Tretlagergehäuse (P) ein Drehmoment bewirkt, das dazu tendiert, die Schwingarme in der Versatzrichtung der Schwingarme schwenken zu lassen.

2. Fahrrad nach Anspruch 1, **dadurch gekennzeichnet, dass** der Schwingarm (15), der das Tretlagergehäuse (P) mit dem vorderen Gestänge (1) verbindet, sich in statischer Ausgleichsposition im Wesentlichen vertikal erstreckt.

3. Fahrrad nach Anspruch 1 oder 2, **dadurch gekennzeichnet, dass** das vordere Gestänge (1) ein Sattelrohr (5) umfasst, an dem der obere Schwingarm (11) entlang der Achse D angelenkt ist.

4. Fahrrad nach Anspruch 1 oder 2, **dadurch gekennzeichnet, dass** das vordere Gestänge (1) ein oberes Rohr (8) umfasst, an dem der obere Schwingarm (11) entlang der Achse D angelenkt ist.

5. Fahrrad nach Anspruch 4, **dadurch gekennzeichnet, dass** der obere Schwingarm (11) an einem Ende des Stoßdämpfers (12) entlang der Achse C angelenkt ist, wobei das andere Ende des Stoßdämpfers mit dem oberen Rohr (8) des vorderen Gestänges (1) fest verbunden ist.

6. Fahrrad nach einem der Ansprüche 1 bis 4, **dadurch gekennzeichnet, dass** der obere Schwingarm (11) ein Gestänge mit zwei Rohrsegmenten (16, 17) bildet, die dem oberen Schwingarm im Bereich der Achse C bzw. D zugeordnet sind, wobei die Segmente in einer Spitze (18) verbunden sind, die an einem Ende des Stoßdämpfers (12) angelenkt ist.

7. Fahrrad nach Anspruch 6, **dadurch gekennzeichnet, dass** das andere Ende des Stoßdämpfers (12) mit dem vorderen Gestänge (1) fest verbunden ist.

8. Fahrrad nach Anspruch 6, **dadurch gekennzeichnet, dass** das andere Ende des Stoßdämpfers (12) mit einem vierten Schwingarm (20) fest verbunden ist, der an dem vorderen Gestänge (1) entlang der Achse (A) angelenkt ist.

9. Fahrrad nach Anspruch 6, **dadurch gekennzeichnet, dass** das andere Ende des Stoßdämpfers (12) mit dem hinteren Gestänge (3) fest verbunden ist.

10. Fahrrad nach Anspruch 3, **dadurch gekennzeichnet, dass** ein Ende des Stoßdämpfers (12) mit einem vierten Schwingarm (20) fest verbunden ist, der an dem vorderen Gestänge (1) entlang der Achse (A) angelenkt ist.

11. Fahrrad nach Anspruch 10, **dadurch gekennzeichnet, dass** das andere Ende des Stoßdämpfers (12) mit dem vorderen Gestänge (1) fest verbunden ist.

12. Fahrrad nach Anspruch 10, **dadurch gekennzeichnet, dass** das andere Ende des Stoßdämpfers (12) mit dem hinteren Gestänge (3) fest verbunden ist.

13. Fahrrad nach Anspruch 3, **dadurch gekennzeichnet, dass** ein Ende des Stoßdämpfers (12) mit dem vorderen Gestänge (1) fest verbunden ist, wobei das andere Ende des Stoßdämpfers mit dem hinteren Gestänge (3) fest verbunden ist.

14. Fahrrad nach einem der Ansprüche 1 bis 13, **dadurch gekennzeichnet, dass** die untere Verankerung (13) des hinteren Gestänges (3) eine vordere Verlängerung (13a) umfasst, an deren Ende der untere Schwingarm (14) entlang der Achse B angelenkt ist.

15. Fahrrad nach einem der Ansprüche 1 bis 13, **dadurch gekennzeichnet, dass** das hintere Gestänge (3) eine untere vertikale Verlängerung (19a) umfasst, an deren Ende der untere Schwingarm (14) entlang der Achse B angelenkt ist.

16. Fahrrad nach einem der Ansprüche 1 bis 15, **dadurch gekennzeichnet, dass** die obere Verankerung (10) des hinteren Gestänges (3) eine vordere Verlängerung (10a) umfasst, an deren Ende der obere Schwingarm (11) entlang der Achse C angelenkt ist.

## Claims

1. A bicycle, the frame of which comprises a front triangle (1) connected to a fork (2), a shock absorber (12) and a rear triangle (3) suspended from said front triangle and connected to a rear wheel (4), said rear triangle comprising at least one upper brace (10) articulated along an axis C to an upper connecting rod (11) which is articulated to the front triangle (1) along an axis D, said rear triangle further comprising at least one lower brace (13) articulated along an axis B to a lower connecting rod (14) which is articulated to the front triangle (1) along an axis A, said bicycle further comprising a bottom bracket (P), said bicycle being **characterized in that** said bottom bracket (P) is associated with a third connecting rod (15) which is articulated to the front triangle (1) along the axis A and **in that** the articulation axes B, C and D are substantially located in the same plane when the bicycle is in a position of static equilibrium (so-called SAG), the displacement of the rear triangle (3) relatively to the front triangle (1) during damping inducing misalignment of the upper (11) and lower (14) connecting rods, the axis A being positioned so that a force from the cyclist on the bottom bracket (P) induces a torque which tends to pivot said connecting rods in the direction of realignment of said connecting rods.

2. The bicycle according to claim 1, **characterized in that** the connecting rod (15) connecting the bottom bracket (P) to the front triangle (1) extends substantially vertically in the position of of static equilibrium.

3. The bicycle according to claim 1 or 2, **characterized in that** the front triangle (1) comprises a saddle tube (5) to which the upper connecting rod (11) is articulated along the axis D.

4. The bicycle according to claim 1 or 2, **characterized in that** the front triangle (1) comprises an upper tube (8) to which the upper connecting rod is articulated along the axis D.

5. The bicycle according to claim 4, **characterized in that** the upper connecting rod (11) is articulated to an end of the shock absorber (12) along the axis C, the other end of said shock absorber being secured to the upper tube (8) of the front triangle (1).

6. The bicycle according to any of claims 1 to 4, **characterized in that** the upper connecting rod (11) forms a triangle with two segments of tubes (16, 17) which are associated with said upper connecting rod respectively at the axes C and D, said segments being connected in an apex (18) which is articulated to one end of the shock absorber (12).

7. The bicycle according to claim 6, **characterized in that** the other end of the shock absorber (12) is secured to the front triangle (1).

8. The bicycle according to claim 6, **characterized in that** the other end of the shock absorber (12) is secured to a fourth connecting rod (20) which is articulated to the front triangle (1) along the axis (A).

9. The bicycle according to claim 6, **characterized in that** the other end of the shock absorber (12) is secured to the rear triangle (3).

10. The bicycle according to claim 3, **characterized in that** one end of the shock absorber (12) is secured to a fourth connecting rod (20) articulated to the front triangle (1) along the axis (A).

11. The bicycle according to claim 10, **characterized in that** the other end of the shock absorber (12) is secured to the front triangle (1).

12. The bicycle according to claim 10, **characterized in that** the other end of the shock absorber (12) is secured to the rear triangle (3).

13. The bicycle according to claim 3, **characterized in that** one end of the shock absorber (12) is secured to the front triangle (1), the other end of said shock absorber being secured to the rear triangle (3).

14. The bicycle according to any of claims 1 to 13, **characterized in that** the lower brace (13) of the rear triangle (3) comprises a front extension (13a) at the end of which the lower connecting rod (14) is articulated along the axis B.

15. The bicycle according to any of claims 1 to 13, **characterized in that** the rear triangle (3) comprises a lower vertical extension (19a) at the end of which the lower connecting rod (14) is articulated along the axis B.

16. The bicycle according to any of claims 1 to 15, **characterized in that** the upper brace (10) of the rear triangle (3) comprises a front extension (10a) at the end of which the upper connecting rod (11) is articulated along the axis C.
